# FASCICULE DE BREVET EUROPEEN

(11) **EP 4 100 281 B1**
(45) Date de publication et mention de la délivrance du brevet: **02.04.2025**
(21) Numéro de dépôt: 21702509.7
(22) Date de dépôt: 04.02.2021
(51) Int. Cl.: B60N 2/809, B60N 2/865, B60N 2/894

(54) **APPUI-TÊTE DE SIÈGE DE VÉHICULE AUTOMOBILE**
KOPFSTÜTZE FÜR KRAFTFAHRZEUG
HEADREST FOR MOTOR VEHICLE SEAT

(30) Priorité: 04.02.2020 FR 2001104
(43) Date de publication de la demande: 14.12.2022
(73) Titulaire: TESCA France, 75008 Paris (FR)
(72) Inventeur: GEORGES, Laurent, 75008 Paris (FR)
(74) Mandataire: Sayettat, Julien Christian
(86) Numéro de dépôt international: PCT/EP2021/052704
(87) Numéro de publication internationale: WO 2021/156386

(56) Documents cités:
- DE-A1- 3 900 495
- DE-B3- 102018 221 626
- DE-U1- 20 204 949

## Description

L'invention concerne un appui-tête de siège de véhicule automobile.

Il est connu de réaliser un appui-tête de siège de véhicule automobile, ledit appui-tête comprenant :
- une armature de montage sur un dossier dudit siège,
- un corps principal monté en partie supérieure de ladite armature,
- un corps secondaire monté en coulissement longitudinal sur ledit corps principal, de sorte que ledit corps secondaire puisse adopter une pluralité de positions, ledit corps secondaire étant solidaire d'une paroi d'appui de la tête d'un passager.

Cependant, les agencements connus comme celui de DE 102018 221626 B3 :
- ne permettent pas de maîtriser au mieux le bon coulissement du corps secondaire par rapport au corps principal, ceci du fait de phénomènes d'arc-boutement et/ou de dispersions dimensionnelles nuisant audit coulissement et à la rigidité de l'ensemble,
- requièrent généralement un nombre important de moyens de rattrapage de jeux.

L'invention a pour but de pallier ces inconvénients.

A cet effet, l'invention propose un appui-tête de siège de véhicule automobile, ledit appui-tête comprenant :
- une armature de montage sur un dossier dudit siège,
- un corps principal monté en partie supérieure de ladite armature,
- un corps secondaire monté en coulissement longitudinal sur ledit corps principal, de sorte que ledit corps secondaire puisse adopter une pluralité de positions, ledit corps secondaire étant solidaire d'une paroi d'appui de la tête d'un passager,
ledit corps secondaire étant monté sur ledit corps principal par au moins un tenon disposé en périphérie d'un desdits corps, ledit tenon présentant en vue longitudinale une forme s'inscrivant dans un trapèze présentant une grande base tournée vers l'intérieur et une petite base tournée vers l'extérieur, ledit tenon coulissant dans une mortaise de forme complémentaire, débouchant par ladite petite base vers l'extérieur, prévue dans l'autres desdits corps, de manière à former une fixation de type « queue d'aronde ».

Dans cette description, les termes de positionnement dans l'espace (haut, bas, supérieur, inférieur, longitudinal, transversal, latéral, avant, arrière, vertical, ...) sont pris en référence à l'appui-tête disposé dans le véhicule en situation d'utilisation.

Avec l'agencement proposé, on assure un guidage par des moyens disposés en zone périphérique de l'appui-tête, ce qui permet :
- de maîtriser au mieux le bon coulissement du corps secondaire par rapport au corps principal, avec suppression des phénomènes d'arc-boutement et/ou d'impact des dispersions dimensionnelles nuisant audit coulissement et à la rigidité de l'ensemble,
- de réduire le nombre de moyens de rattrapage de jeux, comme on le verra plus loin.

D'autres particularités et avantages de l'invention apparaîtront dans la description qui suit, faite en référence aux figures jointes, dans lesquelles :

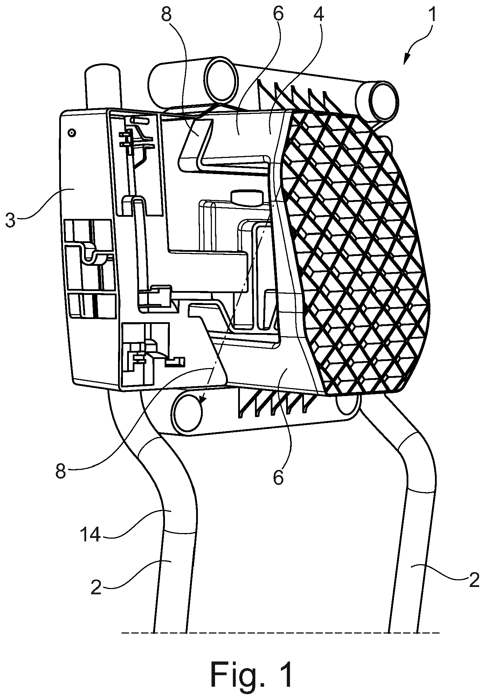

[Fig.1] est une vue schématique en perspective partielle d'un appui-tête selon une réalisation,

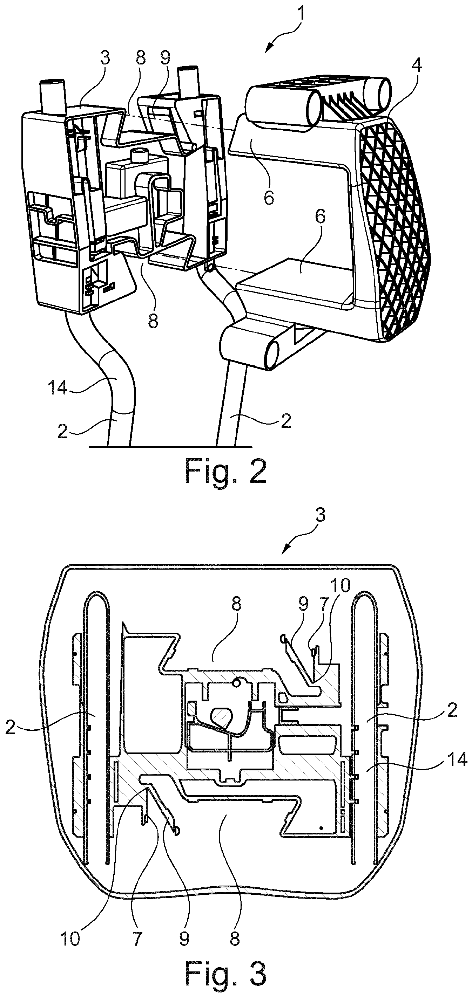

[Fig.2] est analogue à la figure 1 en vue éclatée,
[Fig.3] est une vue schématique selon une direction longitudinale du corps principal de la réalisation illustrée,

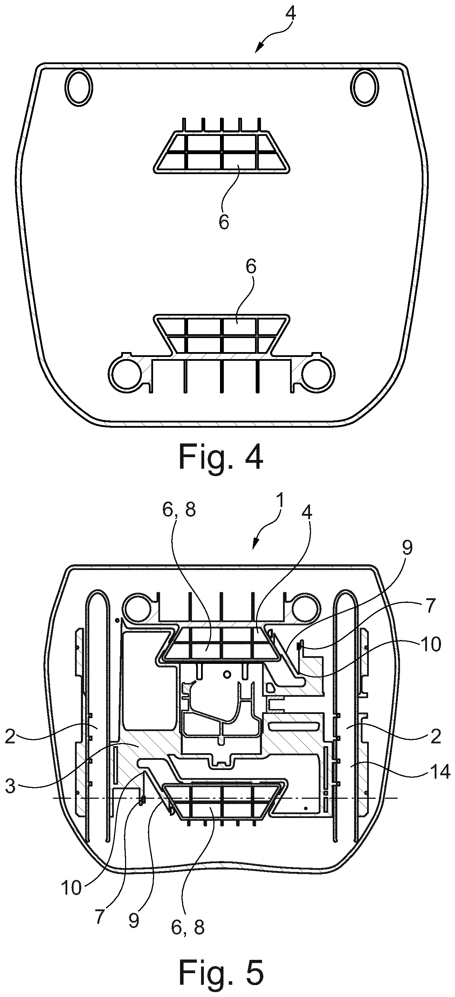

[Fig.4] est une vue schématique selon une direction longitudinale du corps secondaire de la réalisation illustrée,
[Fig.5] est une vue schématique selon une direction longitudinale du corps secondaire monté sur le corps principal,

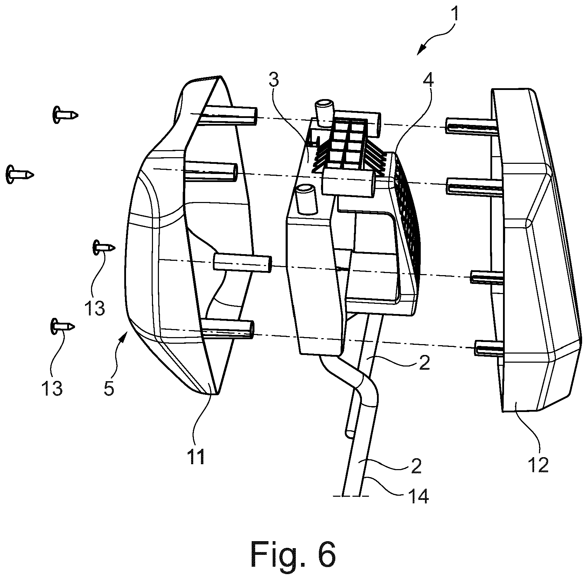

[Fig.6] est analogue à la figure 1, l'appui-tête étant pourvu en outre de deux coques.

En référence aux figures, on décrit un appui-tête 1 de siège de véhicule automobile, ledit appui-tête comprenant :
- une armature **14** de montage sur un dossier dudit siège,
- un corps principal 3 - notamment en matériau plastique moulé - monté en partie supérieure de ladite armature,
- un corps secondaire 4 - notamment en matériau plastique moulé - monté en coulissement longitudinal sur ledit corps principal, de sorte que ledit corps secondaire puisse adopter une pluralité de positions, ledit corps secondaire étant solidaire d'une paroi d'appui 5 de la tête d'un passager, ladite paroi étant notamment recouverte d'un coussin non représenté,
ledit corps secondaire étant monté sur ledit corps principal par au moins un tenon 6 disposé en périphérie d'un desdits corps - ici ledit corps secondaire -, ledit tenon présentant en vue longitudinale une forme s'inscrivant dans un trapèze présentant une grande base tournée vers l'intérieur et une petite base tournée vers l'extérieur, ledit tenon coulissant dans une mortaise 8 de forme complémentaire, débouchant par ladite petite base vers l'extérieur, prévue dans l'autres desdits corps, de manière à former une fixation de type « queue d'aronde ».

Selon la réalisation représentée, l'armature 14 comprend deux branches 2 tubulaires métalliques parallèles sensiblement verticales.

Selon la réalisation représentée, les branches 2 de l'armature sont séparées l'une de l'autre.

Selon une variante non représentée, les branches 2 se relient entre elles par une entretoise s'étendant entre leurs extrémités supérieures, l'armature étant notamment réalisée par pliage d'un tube métallique en U renversé, les branches du U correspondant aux branches 2 de ladite armature et sa partie intermédiaire formant ladite entretoise.

Selon la réalisation représentée, l'appui-tête 1 comprend deux tenons 6 se faisant face selon deux bords opposés - ici les bords supérieur et inférieur - du corps 4 sur lequel ils sont disposés, en l'occurrence le corps secondaire 4 selon la réalisation représentée.

Selon la réalisation représentée, les tenons 6 se faisant face sont positionnés au milieu des bords concernés, ceci afin d'assurer un coulissement optimal du corps secondaire 4, y compris quand il est actionné par sa partie latérale.

Une face latérale d'une mortaise 8 et/ou d'un tenon 6 est pourvue d'une patte 9 élastiquement rétractable, de manière à assurer un contact serrant avec le tenon 6 et/ou la mortaise 8 correspondant/e. Selon la réalisation représentée, la face latérale de la mortaise 8 est pourvue d'une patte 9 assurant un contact serrant avec le tenon 6 correspondant.

Avec un tel agencement, on assure un rattrapage des jeux entre un tenon 6 et la mortaise 8 correspondante dans deux directions, à savoir les directions verticale et transversale.

Selon la réalisation représentée, la patte 9 est issue de moulage du corps 3 concerné - ici le corps principal 3 -, ladite patte étant solidaire dudit corps par une de ses extrémités 10, ladite patte étant mise en contrainte par un ressort métallique 7 pour assurer le contact serrant.

Selon la réalisation représentée, le contact serrant est assuré par deux pattes 9 disposées respectivement en haut et en bas du corps 3 concerné - en l'occurrence le corps principal 3 selon la réalisation représentée -, lesdites pattes étant par ailleurs latéralement opposées, ce qui permet d'assurer un centrage à la fois vertical et transversal tout en minimisant le nombre desdites pattes.

Avec un tel agencement, on n'utilise que deux moyens de rattrapage de jeux formés par les deux pattes 9 associées aux ressorts 7.

De façon non représentée, l'appui-tête 1 peut comprendre en outre un dispositif de verrouillage du corps secondaire 4 selon une pluralité de positions, de sorte que la paroi d'appui 5 puisse présenter une pluralité de positions de réglage.

Selon ne réalisation non représentée, le dispositif de verrouillage du corps secondaire 4 peut comprendre :
- une crémaillère issue dudit corps secondaire, ladite crémaillère s'étendant longitudinalement,
- un loquet monté mobile par rapport au corps principal 3 entre une position de verrouillage, où il s'insère un cran de ladite crémaillère, et une position de déverrouillage, où il se retire dudit cran afin de libérer le coulissement dudit corps secondaire.

De façon non représentée, le corps principal 3 peut être monté en coulissement sur l'armature 14, et en particulier sur les branches 2, l'appui-tête 1 comprenant un dispositif de verrouillage en hauteur dudit corps, de manière à permettre son blocage dans une position de réglage.

Selon une réalisation, le dispositif de verrouillage en hauteur peut comprendre :
- au moins une branche 2 crantée pourvue de crans de réglage s'étageant axialement, c'est à dire selon l'axe d'extension de ladite branche,
- au moins une saillie de verrouillage montée mobile par rapport au corps principal 3 entre une position de verrouillage, où ladite saillie s'insère dans un desdits crans, et une position de déverrouillage, où ladite saillie se retire dudit cran afin de libérer le coulissement dudit corps.

Selon diverses réalisations, le corps secondaire 4 peut être moulé d'une pièce avec la paroi d'appui 5 ou bien constituer une pièce séparée qui est montée sur ladite paroi.

Selon la réalisation représentée, le corps secondaire 4 est solidaire de deux coques avant **11** et arrière 12 associées l'une à l'autre - ici au moyen de vis 13 - pour former un boitier logeant ledit corps, la paroi de ladite coque avant formant la paroi d'appui 5.

Selon la réalisation représentée, le corps secondaire 4 est distinct des coques **11,12,** ledit corps étant rendu solidaire desdites coques de par leur assemblage entre elles.

Avec une telle réalisation, il est possible de réaliser le corps secondaire 4 à base de matériau plastique peu sujet à la déformation à la chaleur (par exemple du polyamide ou de l'acrylonitrile butadiène styrène), ce qui permet d'optimiser le guidage dudit corps à toutes les températures d'utilisation du véhicule, les coques 11,12 pouvant quant à elles être réalisées à base de matériau plastique (par exemple du polyéthylène haute densité) de moindre résistance aux fluctuations de température, et notamment moins coûteux.

Selon une réalisation non représentée, le corps secondaire 4 est moulé d'une pièce avec une des coques 11,12.

Dans ce cas, il convient de réaliser la coque 11,12 faisant un monobloc avec le corps secondaire 4 à base de matériau plastique peu sujet à la déformation à la chaleur (par exemple du polyamide ou de l'acrylonitrile butadiène styrène) si l'on souhaite optimiser le guidage dudit corps à toutes les températures d'utilisation du véhicule.

On peut bien sûr utiliser un matériau plastique de moindre qualité (par exemple du polyéthylène haute densité), mais on dispose alors d'un guidage moins performant.

## Revendications

1. Appui-tête (1) de siège de véhicule automobile, ledit appui-tête comprenant :
• une armature (14) de montage sur un dossier dudit siège,
• un corps principal (3) monté en partie supérieure de ladite armature,
• un corps secondaire (4) monté en coulissement longitudinal sur ledit corps principal, de sorte que ledit corps secondaire puisse adopter une pluralité de positions, ledit corps secondaire étant solidaire d'une paroi d'appui (5) de la tête d'un passager,
ledit appui-tête étant **caractérisé en ce que** ledit corps secondaire est monté sur ledit corps principal par au moins un tenon (6) disposé en périphérie d'un desdits corps, ledit tenon présentant en vue longitudinale une forme s'inscrivant dans un trapèze présentant une grande base tournée vers l'intérieur et une petite base tournée vers l'extérieur, ledit tenon coulissant dans une mortaise (8) de forme complémentaire, débouchant par ladite petite base vers l'extérieur, prévue dans l'autres desdits corps, de manière à former une fixation de type « queue d'aronde ».

2. Appui-tête selon la revendication 1, **caractérisé en ce qu'**il comprend deux tenons (6) se faisant face selon deux bords opposés du corps (4) sur lequel ils sont disposés.

3. Appui-tête selon l'une des revendications 1 ou 2, **caractérisé en ce qu'**une face latérale d'une mortaise (8) et/ou d'un tenon (6) est pourvue d'une patte (9) élastiquement rétractable, de manière à assurer un contact serrant avec le tenon (6) et/ou la mortaise (8) correspondant/e.

4. Appui-tête selon la revendication 3, **caractérisé en ce que** la patte (9) est issue de moulage du corps concerné (3), ladite patte étant solidaire dudit corps par une de ses extrémités (10), ladite patte étant mise en contrainte par un ressort métallique (7) pour assurer le contact serrant.

5. Appui-tête selon l'une des revendications 3 ou 4 lorsqu'elle dépend de la revendication 2, **caractérisé en ce que** le contact serrant est assuré par deux pattes (9) disposées respectivement en haut et en bas du corps concerné (3), lesdites pattes étant par ailleurs latéralement opposées.

6. Appui-tête selon l'une quelconque des revendications précédentes, **caractérisé en ce qu'**il comprend en outre un dispositif de verrouillage du corps secondaire (4) selon une pluralité de positions, de sorte que la paroi d'appui (5) puisse présenter une pluralité de positions de réglage.

7. Appui-tête selon l'une quelconque des revendications précédentes, **caractérisé en ce que** le corps secondaire (4) est solidaire de deux coques avant (11) et arrière (12) associées l'une à l'autre pour former un boitier logeant ledit corps, la paroi de ladite coque avant formant la paroi d'appui (5).

8. Appui-tête selon la revendication 7, **caractérisé en ce que** le corps secondaire (4) est distinct des coques (11,12), ledit corps étant rendu solidaire desdites coques de par leur assemblage entre elles.

9. Appui-tête selon la revendication 7, **caractérisé en ce que** le corps secondaire (4) est moulé d'une pièce avec une des coques (11,12).

## Patentansprüche

1. Kopfstütze (1) eines Kraftfahrzeugsitzes, die Kopfstütze umfassend:
• ein Gestell (14) zur Montage an einer Rückenlehne des Sitzes,
• einen Hauptkörper (3), der in einem oberen Abschnitt des Gestells montiert ist,
• einen Sekundärkörper (4), der verschiebbar in Längsrichtung auf dem Hauptkörper montiert ist, sodass der Sekundärkörper eine Vielzahl von Positionen einnehmen kann, wobei der Sekundärkörper fest mit einer Stützwand (5) des Kopfs eines Passagiers verbunden ist,
wobei die Kopfstütze **dadurch gekennzeichnet ist, dass** der Sekundärkörper durch mindestens einen Zapfen (6), der an einem Umfang eines der Körper angeordnet ist, an dem Hauptkörper montiert ist, wobei der Zapfen in Längsansicht eine Form aufweist, die sich in ein Trapez einschreibt, das eine große, nach innen gerichtete Basis und eine kleine, nach außen gerichtete Basis aufweist, wobei der Zapfen in einer Nut (8) komplementärer Form gleitet, die durch die kleine Basis nach außen mündet und in den anderen der Körper bereitgestellt ist, um eine Befestigung vom Typ "Schwalbenschwanz" zu bilden.

2. Kopfstütze nach Anspruch 1, **dadurch gekennzeichnet, dass** sie zwei Zapfen (6) umfasst, die sich entlang zweier gegenüberliegender Ränder des Körpers (4) gegenüberliegen, an dem sie angeordnet sind.

3. Kopfstütze nach einem der Ansprüche 1 oder 2, **dadurch gekennzeichnet, dass** eine Seitenfläche einer Nut (8) und/oder eines Zapfens (6) mit einer elastisch zurückziehbaren Lasche (9) versehen ist, um einen klemmenden Kontakt mit dem entsprechenden Zapfen (6) und/oder der Nut (8) zu gewährleisten.

4. Kopfstütze nach Anspruch 3, **dadurch gekennzeichnet, dass** die Lasche (9) aus dem Formen des jeweiligen Körpers (3) stammt, wobei die Lasche an einem ihrer Enden (10) fest mit dem Körper verbunden ist, wobei die Lasche durch eine Metallfeder (7) in Vorspannung gebracht wird, um einen klemmenden Kontakt zu gewährleisten.

5. Kopfstütze nach einem der Ansprüche 3 oder 4, wenn abhängig von Anspruch 2, **dadurch gekennzeichnet, dass** der klemmende Kontakt durch zwei Laschen (9) gewährleistet wird, die jeweils oben und unten an dem jeweiligen Körper (3) angeordnet sind, wobei die Laschen außerdem seitlich gegenüberliegend sind.

6. Kopfstütze nach einem der vorhergehenden Ansprüche, **dadurch gekennzeichnet, dass** sie ferner eine Vorrichtung zum Verriegeln des Sekundärkörpers (4) gemäß einer Vielzahl von Positionen umfasst, sodass die Stützwand (5) eine Vielzahl von Einstellpositionen aufweisen kann.

7. Kopfstütze nach einem der vorhergehenden Ansprüche, **dadurch gekennzeichnet, dass** der Sekundärkörper (4) fest mit einer vorderen (11) und einer hinteren (12) Schale verbunden ist, die miteinander assoziiert sind, um ein Gehäuse zu bilden, das den Körper aufnimmt, wobei die Wand der genannten vorderen Schale die Stützwand (5) bildet.

8. Kopfstütze nach Anspruch 7, **dadurch gekennzeichnet, dass** sich der Sekundärkörper (4) von den Schalen (11, 12) unterscheidet, wobei der Körper mit den Schalen durch deren Zusammenbau untereinander fest miteinander verbunden ist.

9. Kopfstütze nach Anspruch 7, **dadurch gekennzeichnet, dass** der Sekundärkörper (4) einstückig mit einer der Schalen (11, 12) geformt ist.

## Claims

1. Headrest (1) for a motor vehicle seat, said headrest comprising:
- a frame (14) for mounting on a backrest of said seat,
- a main body (3) mounted on an upper part of said frame,
- a secondary body (4) longitudinally slidably mounted on said main body, so that said secondary body can adopt a plurality of positions, said secondary body being connected with a support wall (5) of a passenger's head,
said headrest being **characterized in that** said secondary body is mounted on said main body by at least one tenon (6) disposed at a periphery of one of said bodies, said tenon having, in longitudinal view, a shape inscribed in a trapezoid having a large inwardly-facing base and a small outwardly-facing base, said tenon sliding in a mortise (8) of complementary shape, opening out outwardly through said small base, provided in the other of said bodies, so as to form a dovetail-type fastening.

2. Headrest according to claim 1, **characterized in that** it comprises two tenons (6) facing each other along two opposite edges of the body (4) on which they are arranged.

3. A headrest according to one of claims 1 or 2, **characterized in that** one side face of a mortise (8) and/or tenon (6) is provided with an elastically retractable tab (9), so as to ensure clamping contact with the corresponding tenon (6) and/or mortise (8).

4. Headrest according to claim 3, **characterized in that** the tab (9) is molded from the concerned body (3), said tab being connected with said body by one of its ends (10), said tab being stressed by a metal spring (7) to ensure the clamping contact.

5. Headrest according to one of claims 3 or 4 when dependent on claim 2, **characterized in that** the clamping contact is ensured by two tabs (9) arranged respectively at the top and bottom of the concerned body (3), said tabs also being laterally opposed.

6. Headrest according to any of the preceding claims, **characterized in that** it further comprises a device for locking the secondary body (4) in a plurality of positions, so that the support wall (5) can have a plurality of adjustment positions.

7. Headrest according to any one of the preceding claims, **characterized in that** the secondary body (4) is connected with two front (11) and rear (12) shells associated with each other to form a housing accommodating said body, the wall of said front shell forming the support wall (5).

8. Headrest according to claim 7, **characterized in that** the secondary body (4) is distinct from the shells (11, 12), said body being made connected with said shells by their assembly together.

9. Headrest according to claim 7, **characterized in that** the secondary body (4) is molded in one piece with one of the shells (11, 12).
